Europäisches Patentamt

(19) European Patent Office

Office européen des brevets

(11) Numéro de publication: **0 184 516**
**B1**

(12) **FASCICULE DE BREVET EUROPEEN**

(45) Date de publication du fascicule du brevet:
**13.07.88**

(21) Numéro de dépôt: **85402413.0**

(22) Date de dépôt: **04.12.85**

(51) Int. Cl.⁴: **F 16 H 55/56**

(54) Poulie de variateur de vitesse à moyen d'étanchéité à la périphérie du flasque mobile, notamment pour véhicule automobile.

(30) Priorité: **07.12.84 FR 8418696**

(43) Date de publication de la demande:
**11.06.86 Bulletin 86/24**

(45) Mention de la délivrance du brevet:
**13.07.88 Bulletin 88/28**

(84) Etats contractants désignés:
**DE GB IT**

(56) Documents cités:
**GB - A - 804 708**
**GB - A - 2 109 490**
**GB - A - 2 140 106**
**US - A - 3 060 759**
**US - A - 4 411 590**

(73) Titulaire: **VALEO, 64 Avenue de la Grande Armée,
F-75017 Paris (FR)**

(72) Inventeur: **Jaccod, Michel, 68 Rue de la Mézy,
F-94500 Champigny-sur-Marne (FR)**

(74) Mandataire: **CABINET BONNET-THIRION, 95 Boulevard
Beaumarchais, F-75003 Paris (FR)**

ACTORUM AG

## Description

La présente invention concerne d'une manière générale les variateurs de vitesse.

Il s'agit, par exemple, de ceux susceptibles d'être mis en œuvre sur un véhicule automobile pour l'entraînement, à partir du moteur de celui-ci, d'un quelconque organe auxiliaire, tel qu'alternateur, pompe à eau, compresseur ou ventilateur.

Ainsi qu'on le sait, chacune des deux poulies, l'une menante, l'autre menée, dont est doté un tel variateur de vitesse comporte un moyeu, et, en regarde l'un de l'autre, autour dudit moyeu, pour réception d'une courroie, deux flasques annulaires, dont un au moins, dit ici par simple commodité flasque mobile, est monté mobile axialement par rapport audit moyeu.

En pratique, ce flasque mobile peut ainsi se déplacer axialement entre deux positions extrêmes, l'une avancée, l'autre reculée, par rapport à l'autre flasque, dit ici par simple commodité flasque fixe, étant entendu que, lorsque le flasque mobile de la poulie menante est en position avancée, le flasque mobile de la poulie menée est en position reculée, et réciproquement, la courroie correspondante occupant à chaque fois une position déterminée à laquelle correspond elle-même un rapport de transmission déterminé.

La présente invention vise plus particulièrement le cas où, pour le contrôle à tout instant de la configuration de l'ensemble, et donc du rapport de transmission, le flasque mobile de l'une au moins des poulies, et, par exemple, de la poulie menante, est soumis, d'une part, à des moyens élastiques de rappel, qui le sollicitent axialement en permanence en direction du flasque fixe, et qui comportent une pièce annulaire à conicité variable, dite diaphragme, qui, par une partie périphérique formant rondelle Belleville, porte axialement sur le flasque mobile par l'intermédiaire d'une entretoise annulaire en matière élastique et d'une pièce de liaision à laquelle est adhérisée celle-ci, et qui, par une partie centrale fragmentée en doigts radiaux, prend appui sur une pièce, dite ici par simple commodité pièce d'appui, solidaire axialement du moyeu, et, d'autre part, à une chambre de pilotage, qui, formée de manière étanche entre le flasque mobile, le diaphragme, la pièce d'appui et le moyeu, est destinée à être raccordée à une source de fluide appropriée, telle qu'une source de fluide pneumatique en pression ou dépression.

C'est le cas, par exemple, dans le document GB-A-2 140 106, qui a été utilisé pour la délimitation de la revendication 1.

En pratique, dans celle-ci, pour l'étanchéité de la chambre de pilotage au droit du diaphragme, celui-ci est noyé dans une masse en matière élastique, qui, de manière particulièrement avantageuse, est en continuité, tant avec l'entretoise en matière élastique par l'intermédiaire de laquelle se fait l'appui basculant de ce diaphragme sur le flasque mobile qu'avec une autre entretoise en matière élastique par l'intermédiaire de laquelle, de l'autre côté dudit diaphragme, se fait de manière semblable, un appui basculant de ce diaphragme sur la pièce d'appui associée.

Il s'avère que, dans une poulie de variateur de vitesse de ce type, pour l'intégrité de l'étanchéité de la chambre de pilotage, il est préférable de prévoir des moyens d'étanchéité entre le flasque mobile et la pièce de liaison à laquelle se trouve adhérisée l'entretoise en matière élastique par l'intermédiaire de laquelle se fait l'appui basculant du diaphragme sur ce flasque mobile, tout en assurant un positionnement axial positif l'un par rapport à l'autre de ladite pièce de liaison et dudit flasque mobile pour une définition contrôlée de la conicité dudit diaphragme.

La présente invention a d'une manière générale pour objet une disposition répondant de manière particulièrement simple et satisfaisante à cette exigence.

De manière plus précise, elle a pour objet une poulie de variateur de vitesse du genre comportant un moyeu, et, en regard l'un de l'autre, autour dudit moyeu, deux flasques annulaires, dont un au moins, dit ici par simple commodité flasque mobile, est monté mobile axialement par rapport au moyeu sous le contrôle, d'une part, de moyens élastiques de rappel comportant une pièce annulaire à conicité variable, dite diaphragme, qui, par une partie périphérique formant rondelle Belleville, porte axialement sur le flasque mobile par l'intermédiaire d'une entretoise annulaire en matière élastique et d'une pièce de liaison à laquelle est adhérisée celle-ci, et qui, par une partie centrale fragmentée en doigts radiaux, prend appui sur une pièce, dite par simple commodité pièce d'appui, solidaire axialement du moyeu, et, d'autre part, d'une chambre de pilotage, qui, formée de manière étanche entre le flasque mobile, le diaphragme, la pièce d'appui et le moyeu, est destinée à être raccordée à une source de fluide, cette poulie de variateur de vitesse étant d'une manière générale caractérisée en ce que, des moyens d'étanchéité étant prévus entre la pièce de liaison et le flasque mobile, lesdits moyens d'étanchéité sont d'un seul tenant avec l'entretoise en matière élastique correspondante.

Par exemple, selon une première forme de réalisation envisageable, la pièce de liaison ayant en section axiale un profil en équerre et présentant ainsi une aile transversale, au dos de laquelle est adhérisée l'entretoise en matière élastique, et une aile axiale, en couronne, par laquelle elle est solidarisée par exemple par engagement à force, ou par rivetage ou soudage par points, à un rebord axial que présente à cet effet à sa périphérie externe le flasque mobile, les moyens d'étanchéité associés sont, suivant l'invention, établis à la faveur d'un logement ménagé pour eux entre ledit rebord axial du flasque mobile et la pièce de liaison, et il comportent un bourrage de matière élastique qui est au moins localement en continuité avec ladite entretoise en matière élastique, à la faveur par exemple d'au moins un passage prévu à cet effet à travers l'aile transversale de la pièce de liaison au droit dudit logement.

En variant, suivant une deuxième forme de réalisation envisageable, ces moyens d'étanchéité comportent une lèvre annulaire, qui, en continuité avec l'entretoise en matière élastique, avec contournememt de l'aile transversale de la pièce de liaision, est élastiquement appliquée au rebord axial du flasque mobile.

2

Suivant une autre variante, cette lèvre annulaire est remplacée par une simple peau.

Dans tous les cas, il suffit avantageusement d'une même opération pour assurer conjointement la réalisation tant de l'entretoise en matière élastique concernée que des moyens d'étanchéité à mettre en œuvre entre la pièce de liaison correspondante et le flasque mobile.

Les caractéristiques et avantages de l'invention ressortiront d'ailleurs de la description qui va suivre, à titre d'exemple, en référence aux dessins schématiques annexés sue lesquels:

la figure 1 est une vue en coupe axiale d'une poulie de variateur de vitesse suivant l'invention;

la figure 2 reprend, à échelle supérieure, le détail de la figure 1 repéré per un encart II sur celle-ci;

la figure 3 est une vue qui, analogue à celle de la figure 2, illustre le mode de montage de la poulie de variateur suivant l'invention;

les figures 4 et 5 sont des vues qui, chacune respectivement analogues à celles des figures 2 et 3, se rapportent à une variante de réalisation;

les figures 6 et 7 sont des vues qui, analogues aux précédentes, et à la manière de celles-ci, se rapportent à une autre variante de réalisation.

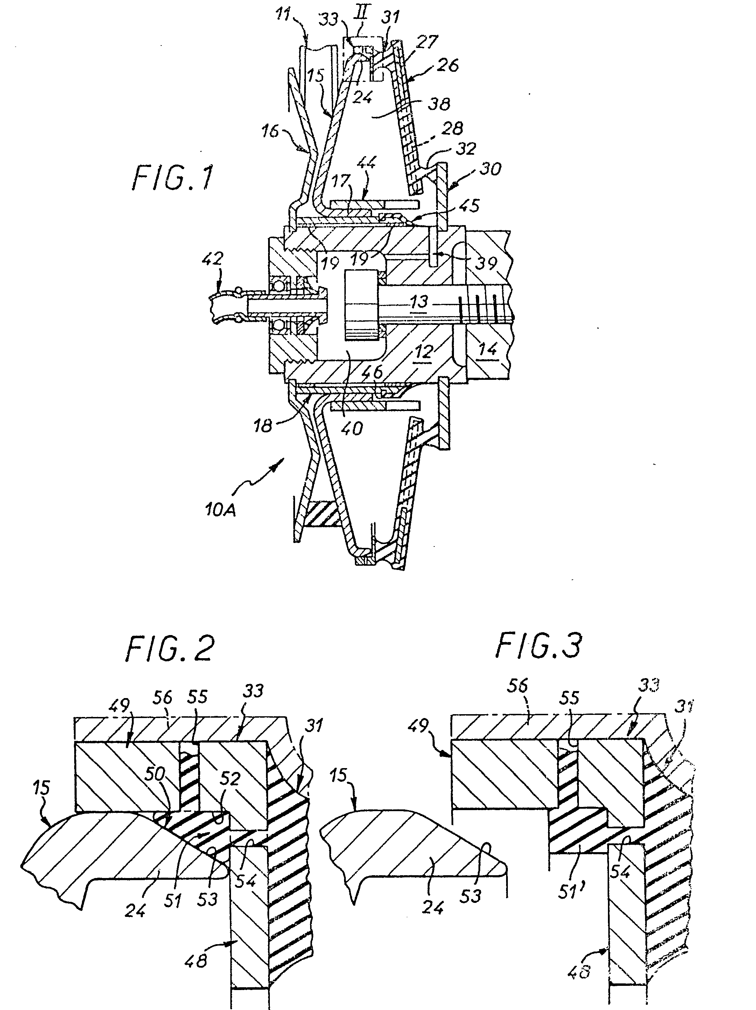

A la figure 1, on reconnaît une poulie de variateur de vitesse propre à la constitution d'un variateur de vitesse du type de celui décrit dans la demande de brevet français No. 8 308 047 mentionné ci-dessus.

Il s'agit, en pratique, de la poulie menante 10A de celui-ci.

Cette poulie menante 10A comporte un moyeu 12, qui, par exemple, et tel que représenté, est rapporté par une vis 13 en bout d'un quelconque arbre d'entraînement 14, en étant ainsi solidarisé en rotation à celui-ci, et, en regard l'un de l'autre, autour dudit moyeu 12, pour la réception d'une courroie 11, deux flasques annulaires 15, 16, à flanc tronconique, dont un au moins, en pratique le flasque 15, dit ici par simple commodité flasque mobile, est monté mobile axialement par rapport au moyeu 12.

En pratique, seul le flasque 15 est ainsi mobile par rapport au moyen 12, le flasque 16 associé, dit ici par simple commodité flasque fixe, étant lui solidaire, tant axialement qu'en rotation, dudit moyeu 12, en étant par exemple serti à cet effet, par sa périphérie interne, en bout de celui-ci, tel que représenté.

Pour sa mobilité sur le moyeu 12, le flasque mobile 15 est solidaire axialement d'une douille 18 engagée à coulissement sur ce moyeu 12.

En pratique, dans la forme de réalisation représentée, le flasque mobile 15 présente, à cet effet, dans sa zone centrale, une collerette axiale 17, qui s'étend en direction opposée au flasque fixe 16, et par laquelle il est rapporté, par exemple par simple engagement à force, ou par soudage, sur ladite douille 18, et, entre celle-ci et le moyeu 12, sont interposés deux coussinets en matériau anti-friction 19, disposés chacun respectivement aux deux extrémités de cette douille 18.

En pratique également, le flasque mobile 15 est d'un seul tenant avec sa collerette axiale 17, et, à sa périphérie, il présente, dans le même sens que celle-ci, et également d'un seul tenant, un rebord axial 24.

Le flasque mobile 15 ainsi constitué est en permanence sollicité en direction du flasque fixe 16 par des moyens élastiques de rappel à action axiale.

Dans la forme de réalisation représentée, ceux-ci sont constitués d'une pièce annulaire à conicité variable 26, dite diaphragme, qui, par une partie périphérique 27 formant rondelle Belleville, est en appui axial basculant contre le flasque mobile 15, et plus précisément contre la tranche du rebord axial 24 de celui-ci, et qui, par une partie centrale 28 fragmentée en doigts radiaux, est en appui axial basculant contre une pièce 30, dite ici par simple commodité pièce d'appui, solidaire axialement du moyen 12, par exemple par sertissage, tel que représenté.

Dans la forme de réalisation représentée, la pièce d'appui 30 est donc solidaire du moyeu 12 non seulement axialement mais également circonférentiellement.

Les appuis basculants du diaphragme 26 sur le flasque mobile 15 et sur la pièce d'appui 30 se font par l'intermédiaire d'entretoises en matière élastique, respectivement 31 et 32, et celles-ci sont d'un seul tenant avec une masse en matière élastique enrobant dans sa totalité ce diaphragme 26.

En pratique, l'entretoise annulaire 31 se trouve adhérisée à une pièce de liaison 33, par exemple métallique, par laquelle l'ensemble est solidarisé au moins axialement, et en pratique tant axialement que circonférentiellement, au rebord axial 24 du flasque mobile 15, et, de même, l'entretoise annulaire 32 est adhérisée à la pièce d'appui 30.

Une chambre 38, ou chambre de pilotage, se trouve ainsi définie entre le flasque mobile 15, le moyeu 12, et l'ensemble constitué par la pièce annulaire 26, ses revêtements en matière élastique, les entretoises annulaires 31, 32, et la pièce d'appui 30.

Cette chambre de pilotage 38 est destinée à être raccordée à une source de fluide, et en particulier à une source de fluide pneumatique, en pression ou dépression.

Pour ce faire, elle communique, par un passage 39, avec un évidement interne 40 du moyeu 12, et celui-ci est lui-même adapté à être raccordé, de manière étanche, par un embout 42, à la source de fluide concernée.

Ces dispositions sont bien connues par elles-mêmes, notamment par la demande de brevet français No 8 308 047, et elles ne seront donc pas décrites plus en détail ici.

De manière également connue en soi, des moyens de butée sont associés au flasque mobile 15 pour en définir les positions extrêmes avancée et reculée, et il s'agit, pour un premier sens axial, de la douille 18 dont il est axialement solidaire, et, pour le sens axial opposé, d'une entretoise annulaire 44, dite ici par simple commodité entretoise de butée, qui, solidaire axialement de ce flasque mobile 15, en étant rapportée sur sa collerette axiale 17, est propre elle aussi à en limiter le déplacement axial, dans ledit sens opposé.

En pratique, suffisamment prolongée a cet effet, la douille 18 est adaptée à coopérer en butée avec le flasque fixe 16, tandis que l'entretoise de butée 44 est adaptée à coopérer en butée avec la pièce d'appui 30.

Pour parfaire la sécurité de l'étanchéité de la chambre de pilotage 38, il est prévu des moyens d'étanchéité, d'une part, autour du moyeu 12, à la périphérie interne du flasque mobile 15, et, d'autre part, entre la pièce de liaison 33 et ledit flasque mobile 15, à la périphérie externe de ce dernier.

De manière connue en soi, les moyens d'étanchéité prévus ainsi autour du moyeu 12 comportent, dans la forme de réalisation représentée, un joint d'étanchéité 45, en pratique un joint à lèvre, qui, serré élastiquement sur ledit moyeu 12, à l'aplomb de l'entretoise de butée 44, est lié en mouvement au flasque mobile 15, en étant ancré, pour ce faire, dans une gorge 46 de la douille 18 dont est solidaire axialement ce flasque mobile 15.

Suivant l'invention, les moyens d'étanchéité prévus par ailleurs entre la pièce de liasion 33 et le flasque mobile 15 sont d'un seul tenant avec l'entretoise en matière élastique 31 correspondante.

En pratique, et de manière connue en soi, la pièce de liaison 33 a, en section axiale, un profil en équerre.

Elle présente, en effet, une aile transversale 48, au dos de laquelle est adhérisée l'entretoise en matière élastique 31, et, en couronne, une aile axiale 49, par laquelle elle est engagée, par exemple simplement à force, mais éventuellement avec un soudage par points complémentaire ou un rivetage sur le rebord axial 24 présent à la périphérie externe du flasque mobile 15.

Dans la forme de réalisation plus particulièrement représentée sur les figures 1 à 3, les moyens d'étanchéité associés sont établis à la faveur d'un logement 50 ménagé pour eux entre le rebord axial 24 du flasque mobile 15 et la pièce de liaison 33, et ils comportent un bourrage en matière élastique 51, qui est au moins en continuité avec l'entretoise en matière élastique 31.

En pratique, dans cette forme de réalisation, le logement 50 se trouve délimité, d'une part, par l'angle interne 52 de la pièce de liaison 33, et, d'autre part, par un chanfrein 53 affectant, à son extrémité, la surface externe du rebord axial 24 du flasque mobile 15, et la continuité entre le bourrage en matière élastique 51 présent dans ce logement 50 et cette entretoise en matière élastique 31 résulte de la présence d'au moins un passage 54 dans l'aile transversale 48 de ladite pièce de liaison 33, au droit dudit logement 50.

De préférence, et tel que représenté, l'aile axiale 49 de la pièce de liaison 33 présente, elle aussi, au droit du logement 50, au moins un passage 55, qui forme évent, et qui, tel que représenté en trait plein, est plus ou moins envahi de matière élastique.

Suivant la variante de réalisation schématisée en traits interrompus sur les figures 2 et 3, l'entretoise en matière élastique 31 est en continuité avec une peau 56, qui recouvre la surface extérieure de l'aile axiale 49 de la pièce de liaison 33, et qui, par le ou les passages 55 prévus dans celle-ci, est elle-même en continuité avec le bourrage en matière élastique 31.

Quoi qu'il en soit, par son extrémité, le rebord axial 24 du flasque mobile 15 est axialement au contact de l'aile transversale 48 de la pièce de liaison 33.

Ainsi qu'il est aisé de le comprendre, lors de la constitution de l'entretoise en matière élastique 31, la matière de celle-ci traverse, par le ou les passages 54, l'aile transversale 48 de la pièce de liaison 33 jusqu'à dégagement par le ou les passages 55 de l'aile axiale 49 de celle-ci formant évents ou envahissement complet de ce ou ces passages 55 lorsqu'une peau 56 est prévue à la surface de cette aile axiale 49, et dans l'angle interne que forment entre elles lesdites ailes 48, 49, elle forme une couronne 51', figure 3.

Dans la forme de réalisation représentée, cette couronne 51' a, en section axiale, un contour quadrangulaire.

Mais il n'en est pas nécessairement toujours ainsi.

Quoi qu'il en soit, lors de l'engagement de la pièce de liaison 33 sur la surface externe du rebord axial 24 du flasque mobile 15, elle se trouve comprimée, en donnant naissance au bourrage de matière élastique 51 recherché.

En effet, lors de cet engagement, la couronne 51' vient au contact du rebord axial 24 du flasque mobile 15 par le chanfrein 53 de celui-ci, et, par fluage, elle se trouve donc progressivement refoulée par lui, en direction de l'une et de l'autre des ailes 48, 49 de la pièce de liaison 33.

Du fait de l'effet de coin ainsi développé, il n'est avantageusement pas nécessaire de procéder à un usinage précis du chanfrein 53.

En pratique, l'engagement de la pièce de liaison 33 sur le rebord axial 24 du flasque mobile 15 est poursuivi jusqu'à contact de son aile transversale 48 avec l'extrémité de ce rebord axial 24, ce qui assure un positionnement axial positif entre cette pièce de liaison 33 et ce flasque mobile 15.

Bien entendu, le logement 50 alors confiné entre la pièce de liaison 33 et le chanfrein 53 de ce rebord axial 24 est fait suffisant pour permettre le fluage de la couronne 51'.

Lorsqu'il est pratiqué à force, l'emmanchement de la pièce de liaison 33 sur le rebord axial 24 du flasque mobile 15 suffit à assurer la liasion nécessaire entre cette pièce de liasion 33 et ce flasque mobile 15.

Mais, en variante, ou en complément, et comme indiqué ci-dessus, cette liaison peut aussi être assurée par soudage ou par rivetage.

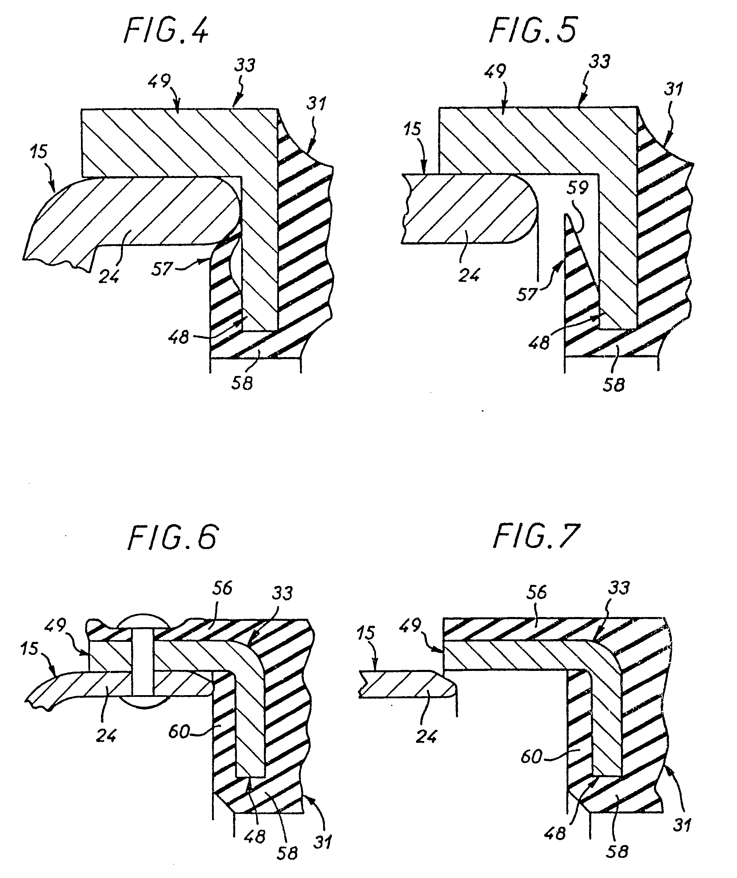

Dans la variante de réalisation illustrée par les figures 4, 5, les moyens d'étanchéité entre la pièce de liaison 33 et le flasque mobile 15 comportent une lèvre annulaire 57, qui, en continuité avec l'entretoise en matière élastique 31, avec contournement, par un tronçon de section transversale en U 58, de l'aile transversale 48 de ladite pièce de liaison 33, est élastiquement appliquée au rebord axial 24 dudit flasque mobile 15.

En pratique, cette lèvre annulaire 57 est sous contrainte axiale, en étant élastiquement déformée en direction de l'aile transversale 48 de la pièce de liasion 33 par le rebord axial 24 du flasque mobile 15.

En effet, tel que représenté à la figure 4, initialement, c'est-à-dire avant mise en place de la pièce de liaison 33 sur le flasque mobile 15, la lèvre 57 s'étend de manière sensiblement droite, parallèlement à l'aile transversale 48 de ladite pièce de liaison 33, avec, sur sa face tournée vers cette aile transversale 48, un chanfrein 59 qui lui confère axialement un profil effilé, et, son extrémité se trouvant sur une circonférence de diamètre intermédiaire entre ceux des surfaces interne et externe du rebord axial 24, elle interfère avec celui-ci lors de l'engagement sur lui de la pièce de liaison 33, ce qui conduit à sa déformation en direction de l'aile transversale 48 de ladite pièce de liaison 33, avec appui élastique sur ledit rebord axial 24.

Suivant la variante de réalisation illustrée par les figures 6, 7, la lèvre annulaire 57 précédente est remplacée par une simple peau 60, qui, comme elle, est en continuité avec l'entretoise en matière élastique 31, par un tronçon de section trasnversale en U 58, et qui recouvre annulairement la surface interne de l'aile transversale 48 de la pièce de liaison 33, sur une partie au moins de celui-ci.

Dans la forme de réalisation représentée, cette peau 60 s'étend sur la totalité de l'aile transversale 48 de la pièce de liaison 33, jusqu'à l'aile axiale 49 de celle-ci.

Lors du montage, l'engagement de la pièce de liaison 33 sur le rebord axial 24 du flasque mobile 15 est fait suffisant pour que, vis-à-vis de la peau 60 recouvrant l'aile transversale 48 de cette pièce de liaison 33, ledit rebord axial 24 ait, comme représenté, une course de «pénétration», dont il résulte un écrasement élastique local de ladite peau 60.

Cette peau 60 étant ainsi localement sous contrainte axiale, en étant élastiquement déformée en direction de l'aile transversale 48 de la pièce de liaison 33 par le rebord axial 24 du flasque mobile 15, une bonne étanchéité est assurée, malgré les éventuels défauts de planéité de ladite peau 60.

Bien entendu, pour éviter de blesser la peau 60, l'extrémité du rebord axial 24 du flasque mobile 15 est de préférence de forme convexe, comme représenté.

La position axiale de la pièce de liaison 33 par rapport au flasque mobile 15 dépendant de l'écrasement de la peau 60 recouvrant l'aile transversale de cette pièce de liaison 33, il suffit, pour la maîtriser, d'appliquer un effort axial déterminé, constant, lors de l'engagement correspondant.

Enfin, dans cette variante de réalisation, au terme de cet engagement, il est procédé, comme représenté à la figure 6, à un rivetage de la pièce de liaison 33 sur le rebord axial 24 du flasque mobile 15, pour confirmer de manière positive sa position axiale par rapport à celui-ci.

Dans la forme de réalisation représentée, ce rivetage est pratiqué à travers une peau en matière élastique 56 en continuité avec l'entretoise en matière élastique 31.

Dans tous les cas, l'étanchéité de la chambre de pilotage 30 se trouve efficacement assurée.

A la poulie menante 12A ainsi constituée se trouve associée, de manière conjuguée, une poulie menée, avec passage en boucle de la courroie 11 sur l'une et l'autre de ces poulies menante et menée.

La consitution de la poulie menée peut être du même type que celle décrite ci-dessus en référence à la poulie menante 12A, avec ou sans chambre de pilotage.

Sa description ne sera donc pas donnée plus en détail ici.

## Revendications

1. Poulie de variateur de vitesse du genre comportant un moyeu (12), et, en regarde l'un de l'autre, autour dudit moyeu (12), deux flasques annulaires (15, 16), dont un au moins, dit ici par simple commodité flasque mobile, est monté mobile axialement par rapport au moyeu (12) sous le contrôle, d'une part, de moyens élastiques de rappel comportant une pièce annulaire à conicité variable (26), dite diaphragme, qui, par une partie périphérique formant rondelle Belleville (27), porte axialement sur le flasque mobile (15) par l'intermédiaire d'une entretoise annulaire en matière élastique (31) et d'une pièce de liaison (33) à laquelle est adhérisée celle-ci, et qui, par une partie centrale (28) fragmentée en doigts radiaux, prend appui sur une pièce (30), dite par simple commodité pièce d'appui, solidaire axialement du moyeu (12), et, d'autre part, d'une chambre de pilotage (38), qui, formée de manière étanche entre le flasque mobile (15), le diaphragme (26), la pièce d'appui (30) et le moyeu (12), est destinée à être raccordée à une source de fluide, caractérisée en ce que, des moyens d'étanchéité (51, 57, 60) étant prévus entre la pièce de liaison (33) et le flasque mobile (15), lesdits moyens d'étanchéité (51, 57, 60) sont d'un seul tenant avec l'entretoise en matière élastique (31) correspondante.

2. Poulie de variateur de vitesse suivant le revendication 1, caractérisé en ce que, la pièce de liaison (33) ayant en section axiale un profil en équerre et présentant ainsi une aile transversale (48), au dos de laquelle est adhérisée l'entretoise en matière élastique (31), et une aile axiale (49), en couronne, par laquelle elle est engagée sur un rebord axial (24) que présente à cet effet à sa périphérie externe le flasque mobile (15), les moyens d'étanchéité associés sont établis à la faveur d'un logement (50) ménagé pour eux entre ledit rebord axial (24) du flasque mobile (15) et la pièce de liaison (33) et ils comportent un bourrage de matière élastique (51) qui est au moins localement en continuité avec ladite entretoise en matière élastique (31).

3. Poulie de variateur de vitesse suivant la revendication 2, caractérisée en ce que ledit logement (50) se trouve délimité par l'angle interne de la pièce de liaison (33) et un chanfrein (53) affectant la surface externe du rebord axial (24) de flasque mobile (15).

4. Poulie de variateur de vitesse suivant l'une quelconque des revendications 2, 3, caractérisée en ce que la continuité entre le bourrage en matière élastique constituant les moyens d'étanchéité (51) et l'entretoise en matière élastique (31) résulte de la présence d'au moins un passage (54, 55) à travers la pièce de liaison (33), au droit du logement (50) correspondant.

5. Poulie de variateur de vitesse suivant la revendication 4, caractérisée en ce que l'aile transversale (48) de la pièce de liaison (33) présente au moins un passage (54) au droit du logement (50) correspondant.

6. Poulie de variateur de vitesse suivant l'une quelconque des revendications 4, 5, caractérisée en ce que l'aile axiale (49) de la pièce de liaison (33) présente au moins un passage (55), au droit du logement correspondant.

7. Poulie de variateur de vitesse suivant la revendication 1, caractérisée en ce que, la pièce de liaison (33) ayant en section axiale un profil en équerre et présentant ainsi une aile transversale (48), au dos de laquelle est adhérisée l'entretoise en matière élastique (31), et une aile axiale (49), en couronne, par laquelle elle est engagée sur un rebord axial (24) que présente à cet effet à sa périphérie externe le flasque mobile (15), les moyens d'étanchéité associés comportent une lèvre annulaire (57), qui, en continuité avec ladite entretoise en matière élastique (31) avec contournement de l'aile transversale (48) de la pièce de liaison (33), est élastiquement appliquée au rebord axial (24) du flasque mobile (15).

8. Poulie de variateur de vitesse suivant la revendication 7, caractérisée en ce que ladite lèvre (57) est sous contrainte axiale, en étant déformée en direction de l'aile transversale (48) de la pièce de liaison (33) par le rebord axial (24) du flasque mobile (15).

9. Poulie de variateur de vitesse suivant l'une quelconque des revendications 2 à 8, caractérisée en ce que, à son extrémité, le rebord axial (24) du flasque mobile (15) est axialement au contact de l'aile transversale (48) de la pièce de liaison.

10. Poulie de variateur de vitesse suivant la revendication 1, caractérisée en ce que, la pièce de liaison (33) ayant en section axiale un profil en équerre et présentant ainsi une aile transversale (48), au dos de laquelle est adhérisée l'entretoise en matière élastique (31), et une aile axiale (49), en couronne, par laquelle elle est engagée sur un rebord axial (24) qur présente à cet effet à sa périphérie externe le flasque mobile (15), les moyens d'étanchéité associés comportent une peau (60), qui, en continuité avec ladite entretoise en matière élastique (31), avec contournement de l'aile transversale (48) de la pièce de liaison (33), recouvre annulairement la surface interne de l'aile transversale (48) de la pièce de liaison (33) sur une partie au moins de celle-ci, ladite peau (60) étant au moins localement sous contrainte axiale, en étant déformée en direction de ladite aile transversale (48) de la pièce de liaison (33) par le rebord axial (24) du flasque mobile (15).

## Patentansprüche

1. Keilriemenscheibe für ein stufenloses Getriebe der Bauart, die eine Nabe (12) und zwei um die Nabe herum einander gegenüberliegende ringförmige Flansche (15, 16) aufweist, von denen zumindest einer, der Einfachheit halber als bewegbarer Flansch bezeichnet, bezüglich der Nabe (12) gesteuert axial bewegbar angeordnet ist, wobei die Steuerung durchgeführt wird von zum einen federnden Rückstellmitteln, die ein ringförmiges Teil (26) mit variabler Konizität, als Tellerfeder bezeichnet, umfassen, das mittels eines einen Belleville-Ring (27) bildenden Umfangsbereich axial unter Zwischenschaltung eines ringförmigen Abstandselements (31) aus elastischem Material axial auf den bewegbaren Flansch (15) drückt und eines Verbindungsteils (33), an dem ersterer anhaftend befestigt sit und welches sich über einen in radiale Finger geteilten Zentralbereich (28) an einem axial fest mit der Nabe (12) verbundenen Teil (30), der Einfachheit halber als Abstützteil bezeichnet, abstützt, und zum anderen einer Steuerkammer (38), die abgedichtet zwischen dem bewegbaren Flansch (15), der Tellerfeder (26), dem Abstützteil (30) und der Nabe (12) gebildet ist, mit einer Fluidquelle verbunden werden kann, dadurch gekennzeichnet, das Dichtmittel (51, 57, 60) zwischen dem Verbindungsteil (33) und dem bewegbaren Flansch (15) vorgesehen sind, wobei die Dichtmittel (51, 57, 60) einstückig mit dem entsprechenden Abstandselement (31) aus elastischem Material ausgebildet sind.

2. Keilriemenscheibe für ein stufenloses Getriebe nach Anspruch 1, dadurch gekennzeichnet, dass das verbindungsteil (33) im Axialschnitt ein Winkelprofil aufweist und somit Querflügel (48), auf dessen Rücken das Abstandselement (31) aus elastischem Material angehaftet ist, und einen kranzartigen Axialflügel (49) besitzt, mittels welchem es auf einem Axialrand (24) aufgesetzt ist, den zu diesem Zweck der bewegbare Flansch (15) an seinem Aussenumfang besitzt, wobei die zugeordneten Dichtmittel vermittels einer zwischen dem axialen Rand (24) des bewegbaren Flansches (15) und dem Verbindungsteil (33) ausgebildeten Aufnahme (50) eingebaut sind und eine Zwickelauffüllung (51) aus elastischem Material aufweisen, die zumindest örtlich fortlaufend mit dem genannten Abstandselement (31) aus elastischem Material ausgebildet ist.

3. Keilriemenscheibe für ein stufenloses Getriebe nach Anspruch 2, dadurch gekennzeichnet, dass die genannte Aufnahme (50) durch einen Innenwinkel des Verbindungsteils (33) und eine Abfasung (53) begrenzt ist, welche letztere an der Aussenfläche des axialen Rands (24) des bewegbaren Flansches (15) ausbegildet ist.

4. Keilriemenscheibe für ein stufenloses Getriebe nach einem der Ansprüche 2, 3, dadurch gekennzeichnet, dass die Kontinuität zwischen der Zwickelfüllung aus elastischem Material, welche die Dichtmittel (51) bildet, und dem Abstandsorgan (31) aus elastischem Material aus dem Vorhandensein zumindest eines Durchgangs (54, 55) durch das Verbindungsteil (33) gegenüber der entsprechenden Aufnahme (50) resultiert.

5. Keilriemenscheibe für ein stufenloses Getriebe nach Anspruch 4, dadurch gekennzeichnet, dass der Querflügel (48) des Verbindungsteils (33) zumindest einen Durchgang (54) gegenüber der zugeordneten Aufnahme (50) aufweist.

6. Keilriemenscheibe für ein stufenloses Getriebe nach einem der Ansprüche 4, 5, dadurch gekennzeichnet, dass der Axialflügel (49) des Verbindungssteils (33) zumindest einen Durchgang (55) gegenüber der zugeordneten Aufnahme aufweist.

7. Keilriemenscheibe für ein stufenloses Getriebe nach Anspruch 1, dadurch gekennzeichnet, dass das Verbindungsteil (33) im Axialschnitt ein Winkelprofil aufweist und somit einen Querflügel (48), auf dessen Rücken das Abstandselement (31) aus elastischem Material angehaftet ist, und einem kranzartigen Axialflügel (49) besitzt, mittels welchem es auf einem Axialrand (24) aufgesetzt ist, den zu diesem Zweck der bewegbare Flansch (15) an seinem Aussenumfang besitzt, wobei die zugeordneten Dichtmittel eine ringförmige Lippe (57) aufweisen, die durchgehend mit dem Abstandselement (31) aus elastischem Material verbunden den Querflügel (48) des Verbindungsteils (33) umgibt und elastisch gegen den axialen Rand (24) des bewegbaren Flansches (15) angedrückt ist.

8. Keilriemenscheibe für ein stufenloses Getriebe nach Anspruch 7, dadurch gekennzeichnet, dass die genannte Lippe (57) unter axialer Vorspannung steht, wobei sie in Richtung des Querflügels (48) des Verbindungsteils (33) durch den axialen Rand (24) des bewegbaren Flansches (15) verformt ist.

9. Keilriemenscheibe für ein stufenloses Getriebe nach mindestens einem der Ansprüche 2 bis 8, dadurch gekennzeichnet, dass der axiale Rand (24) des bewegbaren Flansches (15) an seinem Ende in axialer Richtung in Kontakt mit Querflügel (48) des Verbindungsteils (33) steht.

10. Keilriemenscheibe für ein stufenloses Getriebe nach Anspruch 1, dadurch gekennzeichnet, dass das Verbindungsteil (33) im Axialschnitt ein Winkelprofil aufweist und somit einen Querflügel (48), auf dessen Rücken das Abstandselement (31) aus elastischem Material angehaftet ist und einen kranzförmigen Axialflügel (49) besitzt mittels welchem es auf einem Axialrand (24) aufgesetzt ist, den zu diesem Zweck der bewegbare Flansch (15) an seinem Aussenumfang besitzt, wobei die zugeordneten Dichtmittel eine Haut (60) aufweisen, die durchgehend mit dem genannten Abstandselement (31) aus elastischem Material ausgebildet ist, den Querflügel (48) des Verbindungsteils (33) umgibt und ringförmig die Innenfläche des Querflügels (48) des Verbindungsteils (33) zumindest über einen Abschnitt bedeckt, wobei die Haut (60) zumindest örtlich unter axialer Vorspannung steht, wobei sie in Richtung des Axialflügels (48) des Verbindungsteils (33) durch den axialen Rand (24) des bewegbaren Flansches (15) deformiert ist.

**Claims**

1. A variable speed pulley of the kind comprising a hub (12) and two annular wheel members (15, 16) cooperating with each other and surrounding the said hub (12), at least one of which, here referred to for simple convenience as a movable wheel member, is mounted for axial movement with respect to the hub (12) under the control of, on the one hand resilient biassing means comprising an annular member (26) having a variable cone angle, referred to as a diaphragm, which, by means of a peripheral portion thereof comprising a Belleville washer (27), is carried axially by the movable wheel member (15) through an annular spacer (31) of resilient material and by a junction member (33) to which the latter is adhesively fixed, the diaphragm also bearing, through a central portion (28) divided into radial fingers, on a member (30), referred to for simple convenience as a thrust member and secured on the hub (12) against axial movement, and on the other hand a sealed actuating chamber (38), which is defined between the movable wheel member (15), diaphragm (26), thrust member (30) and hub (12), and is adapted to be connected with a fluid source, characterised in that, sealing means (51, 57, 60) being provided between the junction member (33) and the movable wheel member (15), the said sealing means (51, 57, 60) are integral with the spacer in corresponding resilient material.

2. A variable speed pulley according to Claim 1, characterised in that the junction member (33) has a square profile in axial cross section and thus comprises a transverse flange portion, to the back of which the spacer (31) of resilient material is adhesively secured, and a crown-like axial flange portion (49) whereby it is engaged on an axial flange (24) provided for this purpose at the outer periphery of the movable wheel member (15), the associated sealing means being formed with the help of a space (50) formed therefore between the said axial flange (24) of the movable wheel member (15) and the junction member (33), and comprising an insert portion (51) of resilient material which is, at least locally, continuous with the said spacer (31) of resilient material.

3. A variable speed pulley according to Claim 2, characterised in that the said space (50) is defined by the internal angle of the junction member (33) and a chamfer (53) formed on the outer surface of the axial flange (24) of the movable wheel member (15).

4. A variable speed pulley according to either one of Claims 2 and 3, characterised in that the continuity between the insert portion of resilient material constituting the sealing means (51) and the spacer of resilient material (31) is ensured by the presence of at least one hole (54, 55) through the junction member (33) perpendicular to the corresponding insert portion (50).

5. A variable speed pulley according to Claim 4, characterised in that the transverse flange portion (48) of the junction member (33) has at least one through hole (54) perpendicular to the corresponding insert portion (50).

6. A variable speed pulley according to either one of Claims 4 and 5, characterised in that the axial flange portion (49) of the junction member (33) has at least one through hole (55) perpendicular to the corresponding insert portion (50).

7. A variable speed pulley according to Claim 1, characterised in that the junction member (33) has a square profile in axial cross section and thus comprises a transverse flange portion (48), to the back of which the spacer (31) of resilient material is adhesively secured, and a crown-like axial flange portion (49) whereby it is engaged on an axial flange (24) provided for this purpose at the outer periphery of the movable wheel member (15), the associated sealing means comprising an annular lip (57), which, being continuous with the said spacer (31) of resilient material and turned around the transverse flange portion (48) of the junction member (33), is resiliently engaged with the axial flange (24) of the movable wheel member (15).

8. A variable speed pulley according to Claim 7, characterised in that the said lip (57) is under axial constraint by virtue of being deformed towards the transverse flange portion (48) of the junction member (33) by the axial flange (24) of the movable wheel member (15).

9. A variable speed pulley according to any one of Claims 2 to 8, characterised in that, at its extremity, the axial flange (24) of the movable wheel member (15) is in axial contact with the transverse flange portion (48) of the junction member (33).

10. a variable speed pulley according to Claim 1, characterised in that the junction member (33) has a square profile in axial cross section and thus comprises a transverse flange portion, to the back of which the spacer (31) of resilient material is adhesively secured, and a crown-like axial flange portion (49) whereby it is engaged on an axial flange (24) provided for this purpose at the outer periphery of the movable wheel member (15), the associated sealing means comprising a web (60), which, being continuous with the said spacer (31) of resilient material, and turned around at least part of the transverse flange portion (48) of the junction member (33), the said web (60) being at least locally under axial constraint by virtue of being deformed towards the said transverse flange portion (48) of the junction member (33) by the axial flange (24) of the movable wheel member (15).

FIG.1

FIG.2

FIG.3

## FIG.4

49  33
15  31
24  57
48
58

## FIG.5

49  33  31
15
59
24  57
48
58

## FIG.6

56  33
49
15
24  60
48  58  31

## FIG.7

56  33
15  49
24
60
48  58  31